# EUROPEAN PATENT APPLICATION

(11) **EP 1 271 914 A2**
(43) Date of publication of application: **02.01.2003**
(21) Application number: 02012717.1
(22) Date of filing: 07.06.2002
(51) Int. Cl.: H04N 1/00, H04N 1/32

(54) **Print order receiving server**

(30) Priority: 19.06.2001 JP 2001184209
(71) Applicant: KONICA CORPORATION, Tokyo (JP)
(72) Inventor: Uemura, Hiroyuki, Hino-shi, Tokyo, 191-8511 (JP); Ikeda, Hiroshi, Hino-shi, Tokyo, 191-8511 (JP)
(74) Representative: Henkel, Feiler, Hänzel

(57) **Abstract**

The object of the invention is to provide a print order receiving server that can meet the demands of the clients, without prolonging the working time of the print producing facilities, and without increasing the number of the equipments of the print producing facilities.

Print order receiving server 21 of the facility A, which does not work in the nighttime, forwards print order information received in the nighttime to print order receiving server 41 of the other print producing facility C which works in the nighttime, and thereby, it is possible to produce the print without being delayed, and further possible to meet the demands of the clients without prolonging the working time of the equipment of the print producing facility A, and to improve the rate of operation of the equipment of the print producing facility C which is working in the nighttime.

## Description

### BACKGROUND OF THE INVENTION

The present invention relates to a print order receiving server that is capable of receiving print order information, for example, via a network.

In recent years, an image data generating device such as a digital camera or a scanner has spread at a remarkable speed with the improvement of image processing technologies. Due to this, user's consciousness about a digital image is growing more and more, and the image data generating device has been used in various uses such as home page making of the Internet or digital printing. In a conventional photofinishing laboratory, on the other hand, the print has been produced from a negative film, however, while in a print producing facility that performs an image print service, the service that handles digital image data increases with the spread of the digital camera, accordingly, the service variations are diversified.

On the other hand, with the spread of the Internet into the general homes, there has been performed that a client uploads image data via the Internet to the server controlled by the print producing facility, and the print producing facility produces the print based on the image data uploaded, to provide the print to the client, as an example of the service that handles such digital image data. By this service, the client can order the print of the image data which the client owns, while the client stays in house which is an advantage.

Incidentally, there are actual circumstances that the concentration of the order from the client changes depending on the day of the week or a time zone. In this case, when the orders are concentrated in the specific print producing facility, there are problems that the facility cannot treat the received order and cannot complete to print by the time desired by the client. On the other hand, when the print producing equipment enough to treat the maximum print orders are installed, there is a problem that a working rate of the equipment becomes lower in the case of the small amount of order. Still further, there is also a tendency that the timing of order concentration is different between the print producing facility adjacent to a commercial area and the print producing facility adjacent to a residential area.

### SUMMARY OF THE INVENTION

The present invention has been achieved in view of the above-mentioned problems of the conventional technology, and an object of the invention is to provide a print order receiving server which can meet the client demand without prolonging a working time of the print producing facility or without increasing the number of the equipment.

The above-mentioned object of the invention is attained by either one of the structures shown below.

Structure (1) The print order receiving server of the first invention, represented by a print order receiving server which receives print order information that is sent via the network and is for producing the print in the prescribed print producing facility, forwards print order information received in the predetermined time to the print order receiving server corresponding to the print producing facility other than the above-mentioned prescribed print order producing facility automatically. Therefore, when the above-mentioned prescribed print producing facility is not working in nighttime, for example, if the print order information received in nighttime is transferred to the print order receiving server corresponding to the other print producing facility in which the equipment is working in nighttime, it is possible to meet the demand of the client by producing the print without being delayed, and also possible to suppress production cost without prolonging the working time of the equipment of the prescribed print producing facility, and further, it is also possible to improve rate of operation of the equipment of the other print producing facility which is working in nighttime. Incidentally, "a print order receiving server which receives print order information for producing the print in the prescribed print producing facility" means a print order receiving server which is controlled in the prescribed print producing facility, and it is not always necessary to be installed in the print producing facility, but it is better to be located near the facility for the purpose of control. "The other print producing facility" can be a predetermined print producing facility, but when the other print producing facility cannot finish the print order completely, print order information forwarded to the print order receiving server can be forwarded again to the print order receiving server corresponding to another print producing facility. When there exist a plurality of "the other print producing facilities", priority order can be predetermined, and, print order information can be forwarded to the corresponding print order receiving server in accordance with the priority order. This also applies to the following invention.

Structure (2) In the print order receiving server of the second invention, represented by a print receiving server which receives print order information that is sent via the network and is for producing the print in the prescribed print producing facility, when the print order receiving server receives print order information corresponding to the print order whose amount is beyond the print producing capacity of the prescribed print producing facility, print order information is forwarded automatically to the print order receiving server corresponding to the other print producing facility that is different from the prescribed print producing facility. Therefore, for example, when the print orders are concentrated in the prescribed print producing facility and cannot be finished, if print order information is forwarded to the print order receiving server corresponding to the other print order receiving facility having enough room for production, it is possible to meet a demand of a client for the time limit of delivery by producing prints without being delayed, and to suppress the production cost, because there is no need to increase the production equipment of the prescribed print producing facility, and further, it is possible to improve the rate of operation of the equipment of the other print producing facility. Incidentally, "the print order whose amount is beyond the print producing capacity of the prescribed print producing facility" means a print order having the print amount per a unit hour calculated by contents (an amount of prints, a size of print) and an appointed time of print finishing for the print order to be produced which is greater than the print amount representing number of the prints per a unit hour or an area of prints per a unit hour, in the prescribed print producing facility. This includes the case that the print order is received due to the equipment trouble of the prescribed print producing facility.

Further, when there are a plurality of the other print producing facilities, it is preferable that there is selected automatically the print producing facility from which the prints are estimated to be delivered to the print receiving place for the print order in the shortest period of time. The basis for the foregoing is as follows; the prescribed print producing facility is mostly located near the print receiving place, and in that case, it is conceivable that the other print producing facility is far away from the print receiving place to a certain extent, and it is necessary to consider the delivering time of the finished print. Here, "the print producing facility from which the prints are estimated to be delivered to the print receiving place for the print order in the shortest period of time" means the occasion where a straight distance between the print receiving place and the print producing facility on a map is the shortest or both of the print receiving place and the print producing facility exist in the same administrative area, when an address (understandable by a postal code, for example) of the print receiving place included in print order information and an address of the print producing facility are compared, however it is possible not to be limited in the above-mentioned state, it is not always necessary to be limited to this, and there may be the occasion where the delivery route is the shortest, for example.

Further, it is preferable that the print order receiving server corresponding to the other print producing facility stated above sends information to the effect that it is possible to accept the print order, to the print order receiving server corresponding to the prescribed print producing facility, and the print order receiving server corresponding to the prescribed print producing facility forwards print order information only to the print order receiving server that has sent information to the effect that it is possible to accept the print order. It is for the purpose of preventing cyclic forwarding among the servers.

Further, the print order receiving server corresponding to the prescribed print producing facility sends verifying information corresponding to print order information to be sent to a recording device, and the recording device records verifying information on a recording material, which are preferable, because it is possible to confirm the print order by sending the recording material on which verifying information is recorded to the print producing facility to which print order information has been forwarded. Incidentally, it is preferable that "verifying information" includes print order number, number of prints, and a print size, and something like a bar code is conceivable as its form.

Further, if the print order receiving server to which print order information is forwarded is connected to a reading device which reads verifying information recorded on the recording material, the recording device can read verifying information, which is preferable.

Still further, when the print order receiving server to which print order information is forwarded sends back information to the effect that print order information has been received, to the print order receiving server corresponding to the prescribed print producing facility, the print order receiving server representing a forwarding source receives this information, which is convenient, because the forwarding can be confirmed.

### BRIEF DESCRIPTION OF THE DRAWING

Fig. 1 is a drawing showing a schematic structure of the network print order system including the print order receiving server relating to the present embodiment.
Fig. 2 is a control flowchart of the print order receiving server relating to the present embodiment.
Fig. 3 is a drawing showing the routine for selecting the forwarding address.
Fig. 4 is another control flowchart of the print order receiving server relating to the present embodiment.
Fig. 5 is a drawing showing the data base stored in the prescribed memory area of the print order receiving server 21.

### DETAILED DESCRIPTION OF THE PREFERRED EMBODIMENT

The present invention will be explained below, referring to the embodiments.

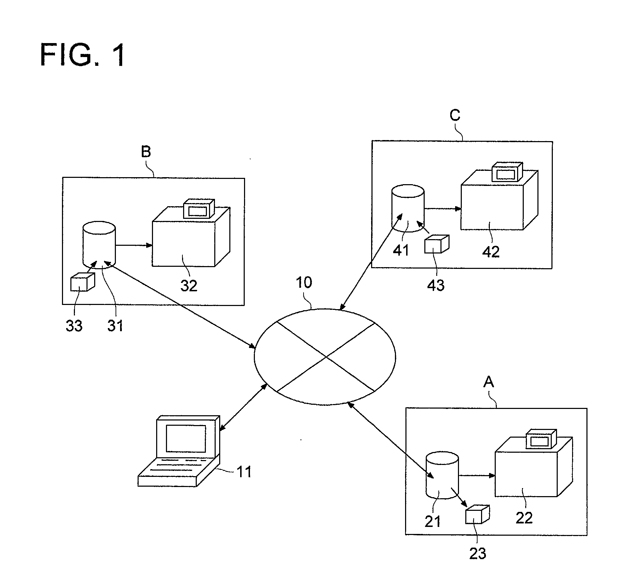

Fig. 1 is a drawing showing a schematic structure of a network print order system including print order receiving server having therein a connecting section and a control section relating to the present embodiment. In Fig. 1, terminal 11 controlled by a print orderer, print order receiving server 21 controlled by print producing facility A, print order receiving server 31 controlled by print producing facility B, print order receiving server 41 controlled by print producing facility C, are connected each other to be capable of communicating data by WAN 10 (Wide Area Network) represented by the Internet, via devices such as an unillustrated router or modem for connecting the terminal or LAN to the Internet. The print order receiving servers 21, 31 and 41 are connected respectively to printers 22, 32 and 42 which print images at their print producing facilities A, B and C. Incidentally, the terminal 11 includes all the devices such as a personal computer, an exclusive print order making device and a cellular phone, which can make print order information and can connect to network.

Here, for the sake of convenience, let it be assumed that the print producing facility A is represented by "the prescribed print producing facility", whose working time is from 8 o'clock a.m. to 5 o'clock p.m., and the print producing facilities B and C are represented by "the other print producing facilities", whose working time is 24 hours respectively. The print order receiving server 21 in the print producing facility A is connected to bar code printer 23 to be capable of communicating data, and the print order receiving servers 31 and 41 in the print producing facilities B and C are connected to bar code printers 33 and 43 to be capable of communicating data. Further, let it be assumed that print order information includes information for image data to be printed, name, address, telephone number, and E-mail address of the print orderer, the number of prints, the print size, the print receiving place, and desired finishing date and hour.

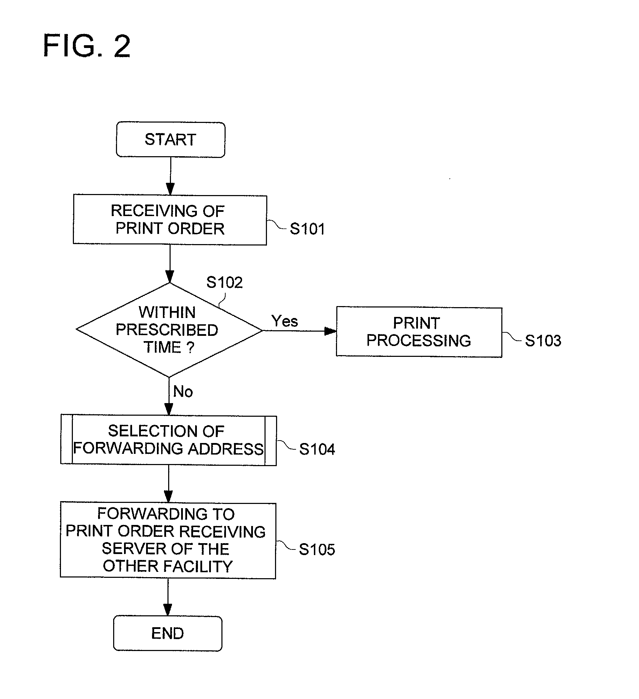

Next, operations of the present embodiment will be explained. Fig. 2 is a drawing showing a control flowchart diagram of the print order receiving server relating to the embodiment. First, let it be assumed that print order information is sent from the terminal 11 of the print orderer to the print order receiving server 21.

The print order receiving server 21 which receives print order information in step S101 of Fig. 2 obtains the time of receiving print order information by a built-in clock, and when it is judged to be within the prescribed time (for example, a time period from 7 o'clock a.m. to 4 o'clock p.m.) (step S102), print order information is sent to the printer 22 to print in step S103, because the print producing facility A can perform print processing.

On the other hand, in step S102, when receiving time is judged not to be within the prescribed time, the print order receiving server 21 understands that it is necessary to forward print order information, because it is not possible to process in the print producing facility A which does not work in nighttime, and performs selecting routine of the forwarding address for print order information, in step S104.

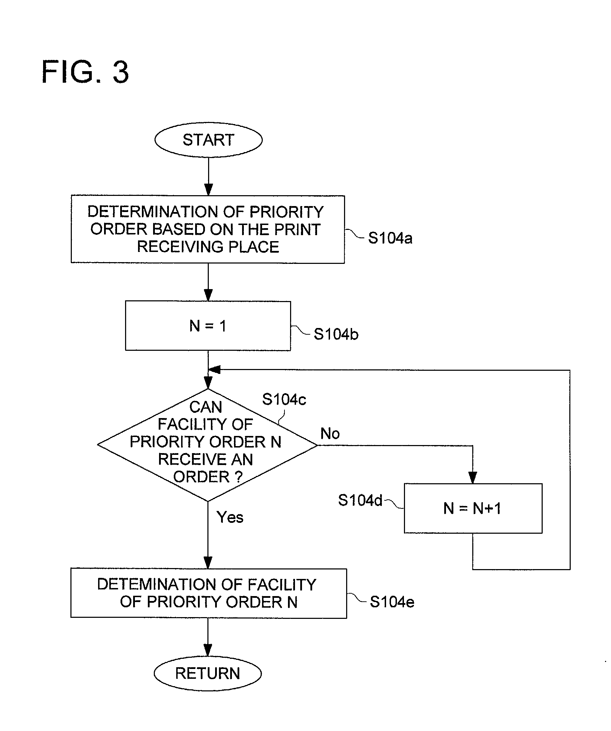

Fig. 3 is a drawing showing the routine of selecting where to forward. Firstly, in step S104a, the print order receiving server 21 reads the address of the print receiving place included in received print order information, compares it with the addresses of all of the other print producing facilities B and C, and determines the order of priority in a manner that the print producing facility B closest to the print receiving place on the map is determined to be of the top priority, and the print producing facility C that is second closest is determined to be of the second priority.

The print order receiving server 21 sets N=1 in the following step S104b, then, in step S104c, accesses the print order receiving server 31 controlled by the print producing facility B in the top priority and inquires, based on the contents of print order information, whether it is possible to receive the print order or not. When the print order receiving server 31 answers that it is impossible to receive print order, the print order receiving server 21 sets N=N+1 in step S104d, and accesses the print order receiving server 41 controlled by the print producing facility C in the second priority and inquires, based on the print order information, whether it is possible to receive the print order or not, in step S104c again. The same operation is repeated thereafter, and when the print order receiving server 21 finds the print producing facility (in this case, C) which can receive the print order, it determines the print order receiving server 41 of the print producing facility C as the forwarding address, in step S104e. Here, there may be a case where all of the print producing facilities cannot receive the print order, and in this case, it is conceivable that the forwarding operation is stopped (not illustrated), under the assumption that the original print producing facility A produces the print.

After the sub-routine for selecting where to forward in Fig. 3 is returned, the print order receiving sever 21 forwards print order information to the determined print order receiving server 41 and completes the operation in step S105 in Fig. 2. In this case, when information to the effect that the forwarding is completed is sent back from the print order receiving server 41 representing the forwarding address, the print order receiving server 21 receives this information, informing that the forwarding has been completed normally.

Incidentally, after the forwarding of print order information, the print order receiving server 21 sends verifying information such as the order number, the number of the prints and the print size, being peculiar to the print order, to the bar code printer 23, and the bar code printer 23 converts these verifying information to the bar code to print out on paper. The printed paper is delivered to the print producing facility C representing the forwarding address, and bar code reader 43 reads out verifying information, by which the forwarded print order information can be verified. The print which is produced by the printer 42 of the print producing facility C is delivered to the print receiving place, and is delivered by hand to the print orderer in exchange for the prescribed payment.

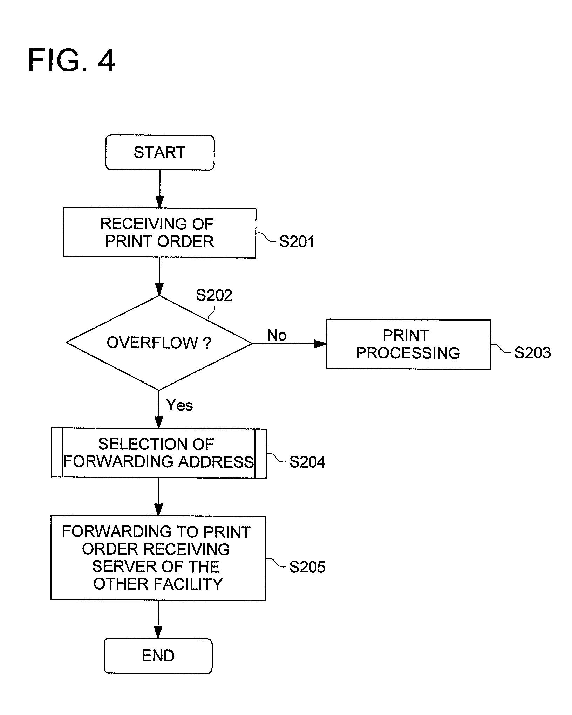

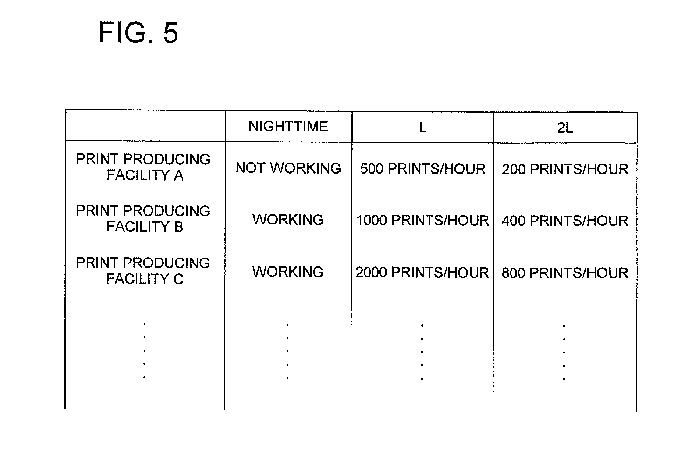

Next, another operation of the present embodiment will be explained. Fig. 4 is another control flowchart of the print order receiving server relating to the embodiment. Fig. 5 is a drawing showing data base stored in a prescribed memory area of the print order receiving server 21. The working time and working capacity of each print producing facility are inputted in this data base. Here, let it be assumed that print order information has been sent to the print order receiving server 21 from the terminal 11 of the print orderer.

In step S201 of Fig. 4, the print order receiving server 21 that has received print order information adds up the contents (the numbers of the print, the print size, the scheduled date for finishing) of the print order included in print information received in step 202, and the contents (the number of the prints, the print size, the scheduled date of finishing) of the already received print orders to calculate the amount of the print per a unit time, and when its summed amount is smaller than the amount of prints such as the number of the prints or the printed square per the pre-established unit time, the print order receiving server 21 understands that the print order can be treated in the print producing facility A sufficiently, and sends print order information to the printer 22 to perform the print processing in step 203.

On the other hand, the print order receiving server 21 that has received print order information adds up the contents (number of the prints, the print size, the scheduled date for finishing) of the print order included in print information received in step 202, and the contents (number of the prints, the print size, the scheduled date of finishing) of the already received print orders to calculate the amount of the print per a unit time, and when its summed amount is larger than the amount of print such as the number of the prints or the print square per the pre-established unit time, the print order receiving server 21 understands that the print order cannot be treated in the print producing facility A sufficiently, and selects the forwarding address of the print order information, in step 204. Here, since the data base shown in Fig. 5 is stored in the prescribed memory area of the print order receiving server 21, the print order receiving server 21 retrieves the data base to select the print producing facility (C in this case) that has enough producing capacity. Incidentally, in selecting the facility, it is possible to inquire of the corresponding print order receiving server whether it is possible to receive an order now or not, as explained in relating to Fig. 3. Or, it is also possible to provide a term concerning the loaded conditions of the other print producing facilities in the data base, so that each of the print order receiving servers may inform its present loaded condition to other print order receiving servers, to update the above-mentioned term from time to time. After that, the print order receiving server 21 forwards print order information to the print order receiving server 41 which has been determined, and completes the operation, in step S205. Further, even when the condition unable to perform printing is detected in the print producing facility, due to the printer troubles or the shortages of the photographic paper or the processing solution, it is needless to say that the print order receiving server can forward the print order information to the other print order receiving server by the same procedure as mentioned above.

As mentioned above, the present invention has been explained referring to the embodiment, but the invention should not be interpreted to be limited to the above-mentioned embodiment, and needless to say, it is naturally possible to modify and improve the embodiment appropriately. For example, it is possible to provide a center server to concentrate all print order information on the server, and thereby to conduct the allocation stated above.

The structure (1) or (2) makes it possible to provide the print order receiving server that can meet the demands of the clients, without prolonging the working time of the print producing facilities, and without increasing the number of the facilities and thereby, reduction of charges for prints can be attained, and acquisition of the new clients can be expected.

## Claims

1. A print order receiving server for use in a printing system incorporating a plurality of print order receiving servers connected with a network, comprising:
a communicating section connected with the network and to receive a print order including digital image data through the network, and
a control section having a predetermined print receiving condition and controlling the communicating section based on the predetermined print receiving condition,
wherein when the control section judges that the communicating section receives the print order on the predetermined print receiving condition, the control section controls the communicating section to transfer the print order to another one of the plurality of print order receiving servers.

2. The print order receiving server of claim 1, wherein when the print order receiving server receives the print order at a predetermined time period as the predetermined print receiving condition, the print order receiving server transfers the print order to the print order receiving server of another one of the plurality of print producing facilities automatically.

3. The print order receiving server of claim 1, wherein when the print order receiving server receives the print order whose amount is larger than a predetermined amount as the predetermined print receiving condition, the print order receiving server transfers the print order to the print order receiving server of another one of the plurality of the print producing facilities automatically.

4. The print order receiving server of claim 1, wherein when the print order receiving server receives the print order under the condition that the printing operation cannot be performed due to the printer trouble or the shortage of photographic paper or processing solution, as the predetermined condition, the print order receiving server transfers the print order to the print order receiving server of another one of the plurality of the print order receiving facilities automatically.

5. The print order receiving server of claim 1, wherein when there are a plurality of the print producing facilities having the print order receiving server, the print producing facility, whose delivering time to a print receiving place for a print orderer is the shortest, is selected automatically.

6. The print order receiving server of claim 1, wherein the print order receiving server of another print producing facility sends back information to the effect that it can accept the print order, to the print order receiving server of the print producing facility, and wherein the print order receiving server transfers print order information to only another print order receiving server.

7. The print order receiving server of claim 1, wherein the print order receiving server of the print producing facility sends verifying information corresponding to print order information, to a recording device, and wherein the recording device records verifying information on a recording material.

8. The print order receiving server of claim 7, wherein the print order receiving server to which print order information is forwarded is connected to a reading device that reads verifying information recorded on the recording material.

9. The print order receiving server of claim 1, wherein the print order receiving server to which print order information has been forwarded sends back information to the effect that the print order receiving server has received print order information.

10. A print receiving system for receiving a print order including digital image data through a network, comprising:
a first print order receiving server, and
a second print order receiving server,
each of the first and second print order receiving servers having
a communicating section connected with the network and to receive a print order including digital image data through the network; and
a control section having a predetermined print receiving condition and controlling the communicating section based on the predetermined print receiving condition,
wherein when the control section of the first print order receiving server judges that the first print order receiving server receives the print order on the predetermined print receiving condition, the communicating section of the first print order receiving server transfers the print order to the second print order receiving server.

11. A print shop for use in a printing system incorporating a plurality of print shops connected with a network, comprising:
a print order receiving server including
a communicating section connected with the network and to receive a print order including digital image data through the network, and
a control section having a predetermined print receiving condition and controlling the communicating section based on the predetermined print receiving condition; and
a printing device to make a print based on the digital image data;
wherein when the control section judges that the communicating section receives the print order on the predetermined print receiving condition, the control section controls the communicating section to transfer the print order to another one of the plurality of print shops.
